# EUROPEAN PATENT APPLICATION

(11) **EP 2 159 016 A2**
(43) Date of publication of application: **03.03.2010**
(21) Application number: 09168829.1
(22) Date of filing: 27.08.2009
(51) Int. Cl.: B26D 5/08, B26F 3/00, C03B 33/00

(54) **Brittle material breaking device**

(30) Priority: 29.08.2008 JP 2008221154
(71) Applicant: Mitsuboshi Diamond Industrial Co., Ltd., Suita-city, Osaka 564-0044 (JP)
(72) Inventor: Yoshimura, Hiroaki, Suita-city Osaka 564-0044 (JP); Funada, Hideaki, Suita-city Osaka 564-0044 (JP); Matsumura, Katsutoshi, Suita-city Osaka 564-0044 (JP)
(74) Representative: TBK-Patent

(57) **Abstract**

The brittle material breaking device includes: a support table for supporting a brittle material; and a breaking bar 59 for pressing down the brittle material on which a scribe line is formed and which is moved by a transfer means. And, the brittle material breaking device breaks the brittle material along the scribe line by using the breaking bar 59. The brittle material breaking device further comprises: a plurality of support members 53 for moving the breaking bar upward and downward; and liner servo motors 57 for moving a plurality of the support members 53. The support members 53 are arranged in a longitudinal direction of the breaking bar 59. The movements of the linear servo motors 57 are controlled so as to change an inclination angle of the breaking bar 59 in a nearly-vertical surface.

## Description

### Background of the Invention

### 1. Field of the Invention

The present invention relates to a brittle material breaking device able to break a brittle material such as a glass substrate having a scribe line with high quality without producing a crack on a breaking cross-section.

### 2. Description of the Related Art

When a predetermined load is applied to one surface of a plate-shaped brittle material such as a glass substrate after a scribe line is formed on the other surface of the brittle material, the brittle material can be broken along the scribe line.

A breaking device using an air cylinder (cylinder breaking device) is often used as a breaking device. The cylinder breaking device is able to let a breaking bar fall at a fast speed to surely break even a thick brittle material. However, since controlling a falling speed of the break bar with an air pressure, the cylinder breaking device is not able to precisely control the falling speed and is hard to adjust an amount of pushing the breaking bar.

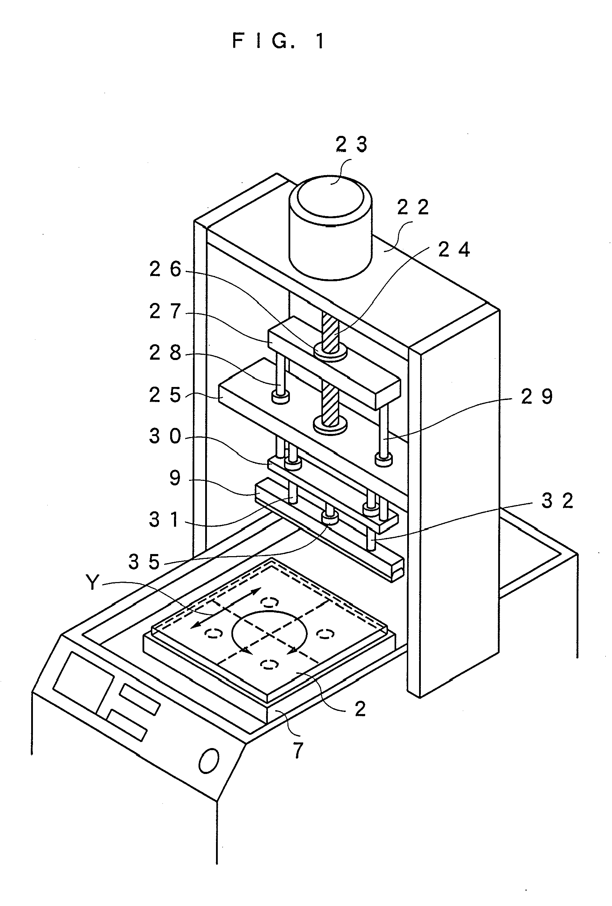

Thus, a breaking device able to precisely control a pressure to the brittle material by using a servo motor (servo breaking device) is developed. The servo breaking device is able to break even a thin brittle material with high quality. Fig.1 is a perspective view showing a schematic configuration of the conventional servo breaking device. Fig.1 is a perspective view showing a schematic configuration of the conventional servo breaking device.

As shown in Fig. 1, the conventional servo breaking device has a servo motor 23 on a horizontal fixture member 22, directly connects a ball screw 24 to a rotational axis of the servo motor 23, and rotatably supports a lower end of the ball screw 24 on a horizontal fixture member 25. The upper moving member 27 has a female screw 26 screwed with the ball screw 24 and has support axes 28 and 29 on the lower side of the both end portions. The support axes 28 and 29 pierce through the horizontal fixture member 25 and are fixed to a lower moving member 30. In this construction, when the servo motor 23 rotates, the lower moving member 30 and the upper moving member 27 move upward and downward as one.

Meanwhile, the breaking bar 9 has two axes 31 and 32 on the upper side, the axes 31 and 32 are slidably inserted into through-holes of the lower moving member 30, and thus the breaking bar 9 can move upward and downward with respect to the lower moving member 30. Additionally, the lower moving member 30 and the breaking bar 9 are in communication with each other via a load sensor 35 in a connection mechanism.

A table 7 can move in the Y direction and rotate as shown by arrowed lines in the drawings. A brittle material 2 to be broken is placed on the table 7. When a scribe line formed on the brittle material 2 is positioned on fall line of the breaking bar 9 and the breaking bar 9 is let fall, the brittle material 2 can be broken.

However, a servo breaking device disclosed in Japanese Unexamined Patent Publication No. H10-330125 can break a thin substrate with high quality but cannot break a thick substrate requiring a breaking bar to be let fall at a predetermined speed or more. Accordingly, a cylinder breaking device had to be used for breaking a thick substrate. This has to use in parallel a plurality of the breaking devices depending on the thickness of the substrate to be broken, and is hard to reduce a production cost.

In addition, the servo breaking device lets the break bar fall at a low speed to gradually apply a pressure to the thin substrate, and thereby breaks the thin substrate without breakage. Accordingly, the servo breaking device does not need to have a mechanical stopper for stopping the falling of the breaking bar. However, in order to break the thick substrate along a scribe line, the servo breaking device has to let the breaking bar 9 fall at a predetermined speed or more. As described above, since the conventional servo breaking device does not have the mechanical stopper and cannot stop the breaking bar 9 falling at the predetermined speed or more at an appropriate position, the breaking bar 9 exceedingly pushes the thick substrate and sometimes breaks the breaking device itself.

The present invention is achieved in view of such circumstances, and intends to provide a brittle material breaking device able to break a brittle material with high quality regardless of whether the brittle material to be broken is the thick substrate or the thin substrate.

To achieve the above-mentioned purpose, a brittle material breaking device according to a first invention which comprises a breaking bar for pressing a brittle material on which a scribe line is formed and breaks said brittle material by pressing said breaking bar on said brittle material along said scribe line, is characterized in that the brittle material breaking device further comprises: a breaking bar support member having a plurality of opening portions for supporting said breaking bar; a plurality of moving members each having a connecting portion for rotatably supporting said breaking bar support member by connecting said connecting portion to said opening portion; a plurality of support members for supporting a plurality of said moving members; a plurality of motors for moving a plurality of said support members upward and downward; and a control device for controlling movements of a plurality of said motors.

The brittle material breaking device may include a support table for supporting a brittle material.

In addition, the brittle material breaking device according to a second invention is characterized in that the inclination angle of said breaking bar in the nearly-vertical surface is changed so that the maximum pressure portion at which said brittle material is pressed down can move from one end of said scribe line to the other end in the first invention.

The control device may vary movement speeds of a plurality of motors to be different from each other.

The control device may vary movement times of a plurality of motors to be different from each other.

The first and second inventions comprise: a plurality of the support members to support a plurality of the moving members for rotatably supporting the breaking bar support member; and the motors as actuators for moving a plurality of the support members. A plurality of said support members are arranged in a longitudinal direction of the breaking bar, and the movements of the motors are controlled so as to change an inclination angle of the breaking bar in a nearly-vertical surface. When employing a plurality of, for example, two support members, the breaking bar can be inclined at desired angle in a nearly-vertical surface of the breaking bar by changing falling distances of the support members. Accordingly, when the inclination angle of the breaking bar is changed so that the stress applied to the brittle material can be gradually applied from one end of the scribe line to the other end in the breaking, a pressure point movement similar to the pressure point movement of the case where the brittle material is sequentially torn by human hands can be realized. And thus, the brittle material breaking device realizes the breaking of a brittle material with high quality without causing a crack on edge faces.

In addition, the breaking device according to a third invention is characterized in that an axial distance adjustment mechanism for adjusting a distance between said support members in the inclination of said breaking bar is included in one or more connecting portions between said support members and said breaking bar in the first or second invention.

At least one of a plurality of the opening portions of the breaking bar support member may be in a nearly-rectangular shape with a size to allow movement of the connecting portion of the moving member.

The third invention includes the axial distance adjustment mechanism for adjusting a distance between the support members in the inclination of said breaking bar is included in one or more connecting portions between the support members and the breaking bar. Since the distance between the support members in a nearly-horizontal direction is shortened in the case where the breaking bar is inclined, a slide mechanism or the like is provided to the connecting portion to eliminate a load in the support members, thereby being able to precisely control the inclination of the breaking bar.

In addition, the breaking device according to a fourth invention is characterized in that a control mechanism for preventing the breaking bar from moving downward lower than a predetermined position is included in any one of the first to third inventions.

Since including the control mechanism for preventing the breaking bar from moving downward lower than a predetermined position, the fourth invention is able to prevent the excessive falling of the breaking bar even in the case where the falling speed of the breaking bar is faster than that of the conventional servo breaking device. Accordingly, not only the thin brittle materials but also the thick brittle materials can be broken without changing the breaking device.

According to the above-mentioned configuration, when employing a plurality of, for example, two support members of the breaking bar, the breaking bar can be inclined at a desired angle in a nearly-vertical surface by changing falling distances of the support members respectively. Accordingly, when the inclination angle of the breaking bar is changed so that the stress applied to the brittle material can be gradually applied from one end of the scribe line to the other end, for example, in the breaking, a pressure point movement similar to the pressure point movement of the case where the brittle material is sequentially torn by human hands can be realized. And thus, this realizes the breaking of a brittle material without producing a crack on a broken cross-section and with high quality.

### Brief Description of the Drawings

Fig. 1 is a perspective view showing a schematic configuration of a conventional servo breaking device;
Fig. 2 is a front view showing a configuration of a brittle material breaking device according to an embodiment of the present invention;
Fig. 3 is a partially-enlarged view showing a configuration of one of control mechanisms of the brittle material breaking device according to the embodiment of the present invention;
Fig. 4 is a block diagram showing a configuration of a control device of the brittle material breaking device according to the embodiment of the present invention;
Fig. 5 a view exemplifying the number of pulses per unit time of a pulse signal sent by a CPU to two linear servo motors;
Fig. 6 is a schematic diagram showing a positional relationship between a breaking bar and a brittle material to be broken; and
Fig. 7 shows a view exemplifying an axial distance adjustment mechanism of the brittle material breaking device according to the embodiment of the present invention.

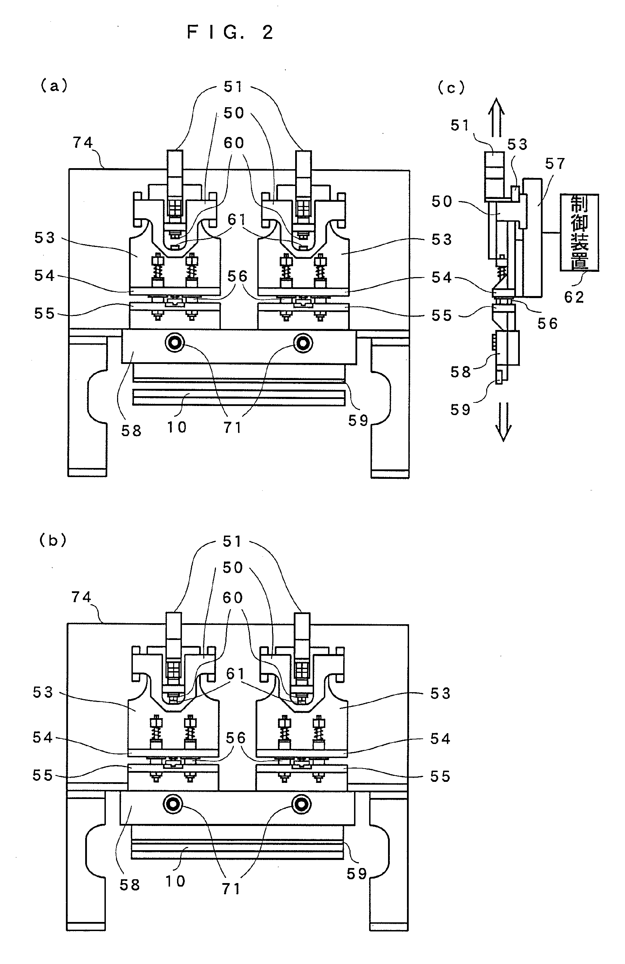

Description of the Preferred Embodiments Referring to drawings, an embodiment of the present invention will be explained below. Fig. 2 shows a front view and a partial side view of a configuration of a brittle material breaking device according to the embodiment of the present invention. Fig. 2(a) is the front view showing the configuration of the brittle material breaking device according to the embodiment before a breaking bar is let fall. Fig. 2(b) is the front view showing the configuration of the brittle material breaking device according to the embodiment after the breaking bar was let fall. Fig. 2(c) is the partial side view showing the configuration of the brittle material breaking device according to the embodiment.

As shown in Fig. 2(a), a brittle material breaking device 1 according to the embodiment of the present invention includes two stepping motors 51 assembled to support members 53, the support members being able to move upward and downward with respect to machine frames 50 respectively. Collision parts 60 are provided to lower ends of rotational axes of the stepping motors 51, and distances between the stepping motors 51 and the collision parts 60 can be changed by rotating the stepping motors 51. In this manner, falling distances of the breaking bar can be adjusted.

As shown in Fig. 2(c), linear servo motors 57 are assembled on back surfaces of the support members 53 respectively. The linear servo motors 57 are fixed to a chassis 74 to which the machine frames 50 are fixed. The support members 53 move upward and downward with respect to the machine frames 50 by the linear servo motors 57, respectively.

Returning to Fig. 2(a), upper moving members 54 are provided to lower portions of the support members 53. Each of the upper moving members 54 has two through-holes. As shown in Fig. 2(a), each of guide axes 56 has a stopper ring 75 at the upper end. In addition, each of the guide axes 56 retains a spring between the stopper ring 75 and the upper moving member 54 and passes through the through-holes of the upper moving members 54. Additionally, lower ends of the guide axes 56 passing through the through-holes of the upper moving members 54 are fixed to lower moving members 55 respectively. Moreover, a breaking bar support member 58 is connected to the lower moving members 55. The members under the lower moving members 55 are accordingly in the same configuration where the members are suspended from the guide axes 56 that are supported by the upper moving members 54 via the spring.

In addition, the lower moving members 55 support the breaking bar support member 58 to which the breaking bar 59 is fixed, and the breaking bar 59 moves upward and downward in synchronization with the support members 53 by the linear servo motors 57.

Meanwhile, the breaking bar support member 58 is rotatably connected to the lower moving members 55 at two connecting portions 71. In addition, the support members 53 can be let fall at speeds different from each other when the linear servo motors 57 are driven at speed different from each other, and thereby the breaking bar support member 58 can be inclined to a desired direction and the breaking bar 59 also can be inclined.

In the same manner as that of the conventional breaking device, in order to break a brittle material, the brittle material to be broken is placed on a support table (not shown in the drawing) able to move in the Y direction and rotate and a scribe line formed on the brittle material is positioned on fall line of the breaking bar 59. And then, the breaking bar 59 is let fall by driving the linear servo motors 57. In this case, it is preferable to include two control mechanisms composed of the collision parts 60 and stoppers 61 so that the breaking bar 59 cannot exceedingly fall, the control mechanisms are provided to the right side and left side of the chassis 74.

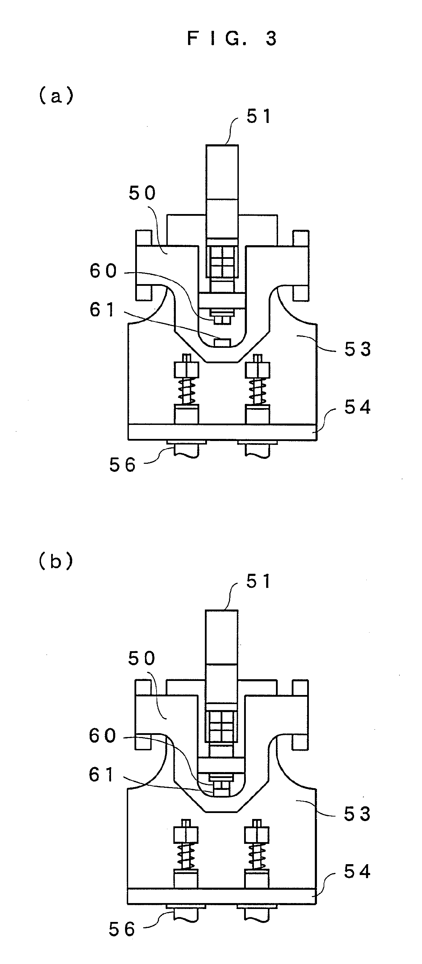

Fig. 3 is a partially-enlarged view showing a configuration of one of the control mechanisms of the brittle material breaking device 1 according to the embodiment of the present invention. Fig. 3(a) shows a state of the control mechanism before the collision part 60 contacts to the stopper 61, and Fig. 3(b) shows a state of the control mechanism after the collision part 60 contacted to the stopper 61.

The linear servo motor 57 is connected to the support member 53 and the collision part 60 is provided to the lower end of the rotational axis of the stepping motor 51. The stopper 61 is arranged at a position where a locus of movement of the collision part 60 intersects with the machine frame 50, and keeps a predetermined clearance from the collision part 60 before the breaking bar support member 58 falls. The predetermined clearance can be adjusted by rotating the stepping motor 51 to change the distance between the collision part 60 and the stopper 61. In the breaking, when the linear servo motor 57 moves at a high speed, the support member 53 and the breaking bar 59 falls together. At this time, when the collision part 60 collides to the stopper 61 as shown in Fig. 3(b), the support member 53 stops falling and thereby the breaking bar 59 also stops falling at the moment.

That is, in the breaking of the brittle material, a falling speed of the breaking bar 59 can be controlled by controlling moving speeds of the two linear servo motors 57. For example, in the case where the brittle material to be broken is a thin substrate, the falling speed of the breaking bar 59 can be slow by keeping the moving speeds of the linear servo motors 57 low. In this manner, the brittle material is broken along the scribe line and an undesirable crack can be avoided. In addition, in the case where the brittle material to be broken is a thick substrate, the falling speed of the breaking bar 59 can be fast by keeping the moving speeds of the linear servo motors 57 high. Accordingly, this device can certainly break even the brittle material having a thickness enough to interfere with the smooth breaking along the scribe line.

In the case where the brittle material to be broken is the thick substrate, the breaking bar 59 is hard to stop due to inertia and may fall exceedingly. Accordingly, when the collision parts 60 to contact to the stoppers 61 are provided to the lower ends of the rotational axes of the stepping motors 51, the breaking bar 59 is controlled by the stoppers 61 so as not to fall any more at the time when the collision parts 60 collide to the stoppers 61. In this manner, this device can safely break the brittle material even when the brittle material to be broken is a thick substrate.

Meanwhile, the stoppers 61 preferably have rotatable mechanisms at portions to catch the collision parts 61. Since attached to the rotational axes of the stepping motors 51, the collision parts 60 have a rotatable configuration. In the collision of the collision parts 60 to the stoppers 61, rotation of the collision parts 60 may generate a phase shear force in the stoppers 61, and accordingly the stoppers 61 need high durability. Hence, when each of the stoppers 61 is configured by: having a pedestal part with a rotational axis in the central portion of a discoid member, for example, on a thrust bearing; and fitting the rotational axis portion of the pedestal part into the thrust bearing, the discoid member of the stoppers 61 rotate together depending on the rotation of the collision parts 60 and thereby the generation of the phase shear force can be prevented. Accordingly, the wear resistances of the stoppers 61 are exceedingly improved.

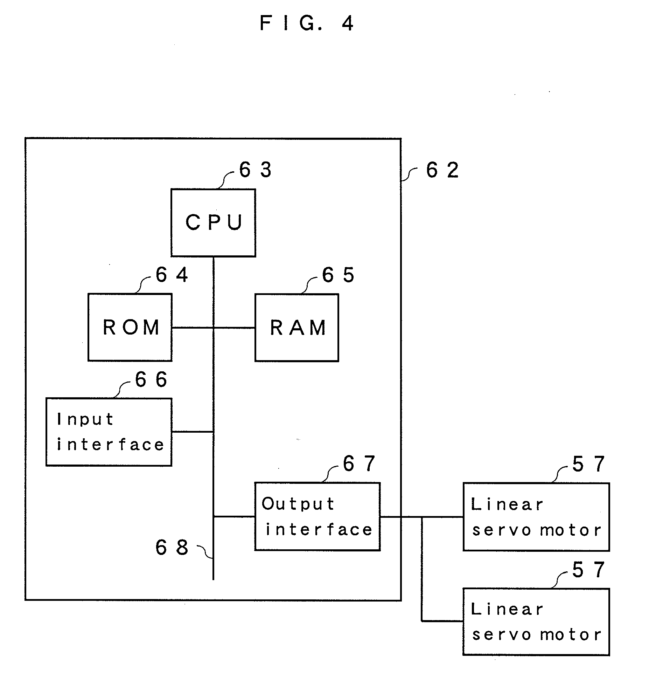

A control device 62 of the brittle material breaking device 1 controls the operations of the linear servo motors 57. Fig. 4 is a block diagram showing a configuration of the control device 62 of the brittle material breaking device 1 according to the embodiment of the present invention.

As shown in Fig. 4, the control device 62 is composed of at least a CPU (Central Processing Unit) 63, a ROM 64, a RAM 65, an input interface 66, an output interface 67, and an internal bus 68 for connecting the above-mentioned hardware.

The CPU 63 is connected to each of the above-mentioned respective hardware of the control device 62 via the internal bus 68, controls the operations of each of the above-mentioned blocks, and executes various types of software functions in accordance with computer programs stored in the ROM 64. The RAM 65 is composed of a volatile memory such as an SRAM or an SDRAM. A load module is developed in the RAM 65 in execution of the computer programs and the RAM 65 stores temporal data and the like produced in the execution of the computer programs.

The input interface 66 accepts command information inputted from an input device and the like (not shown in the drawing), and sends a command signal to an actuator and the like connected to the CPU 63 in accordance with the accepted command information. The output interface 67 sends the command signal from the CPU 63 to an external actuator, for example, the linear servo motors 57 for controlling the operations of the breaking bar 59.

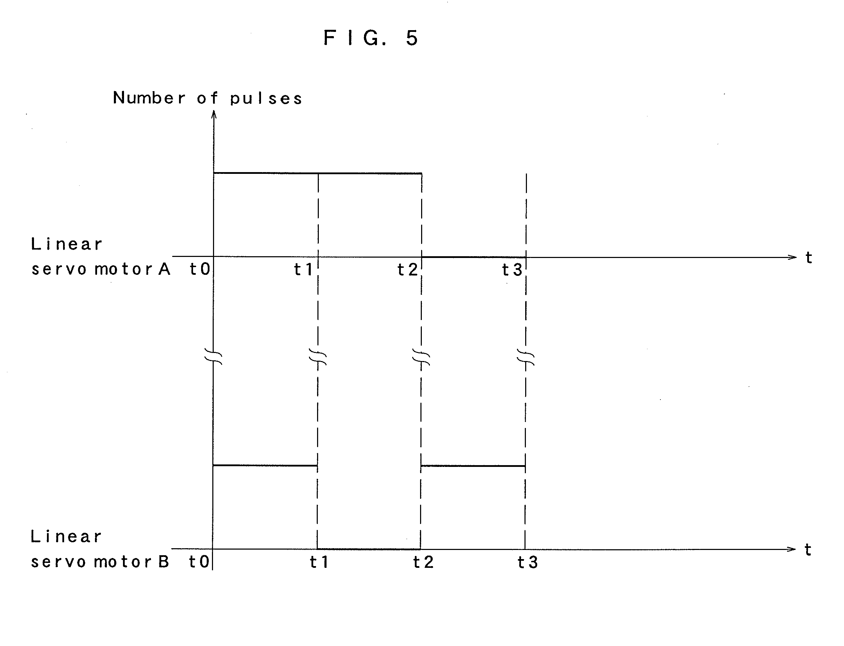

Fig. 5 is a view exemplifying the number of pulses per unit time of a pulse signal sent by the CPU 63 to the two linear servo motors 57. For convenience, the linear servo motor 57 on the left side is represented by A and the linear servo motor 57 on the right side is represented by B.

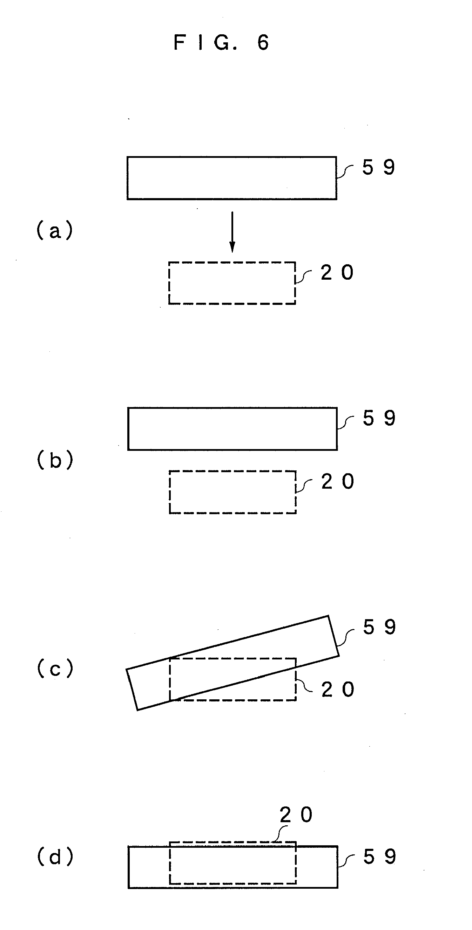

Fig. 6 is a schematic diagram showing a positional relationship between the breaking bar 59 and the brittle material to be broken. The relationship will be explained in relation to a pulse signal shown in Fig. 5 below.

At first, from time 0 to t1, the CPU 63 sends the pulse signal of the constant number of pulses per unit time to both of the linear servo motors A and B. That is, the linear servo motors A and B move at the same speed and accordingly the breaking bar 59 falls at a constant speed with an approximately-horizontal state. Thus, the breaking bar 59 horizontally falls to be in a state of Fig. 6(b) from a state of Fig. 6(a), and the breaking bar 59 falls close to the brittle material 20.

From time t1 to t2, the CPU 63 continues to send the pulse signal to the linear servo motor A at the same number of pulses as that up to time t1 and stops sending the pulse signal to the linear servo motor B. Specifically, while the left side of the breaking bar 59 continuously falls due to the moving of the linear servo motor A, the right side of the breaking bar 59 stops falling because the linear servo motor B stops. Accordingly, the breaking bar 59 is in a state where the right side is higher than the left side as shown in Fig. 6(c). At this time, since the breaking bar 59 contacts to the brittle material from the left side and is pushed along the scribe line, the breaking of the brittle material 20 firstly starts from the left side.

From time t2 to t3, the CPU 63 sends the pulse signal again to the linear servo motor B at the same number of pulses as that up to time t1 and stops sending the pulse signal to the linear servo motor A. Specifically, since the left linear servo motor A stops moving, the left side of the breaking bar 59 doe not fall any more, and since the right linear servo motor B moves again, only the right side of the breaking bar 59 falls. Accordingly, only the right side of the breaking bar 59 continues to fall until the breaking bar 59 is in an approximately-horizontal state as shown in Fig. 6(d) and the breaking bar 59 contacts to the brittle material and is sequentially pushed down from the left side to the right side, thereby a state of pressure application same as that where the brittle material is sequentially torn by human hands can be realized.

Meanwhile, in the case where the breaking bar 59 inclines, stress is generated in the support members 53 in a direction intersecting with a vertical direction (for example, an approximately-horizontal direction). Accordingly, when the breaking bar 59 inclines to change a distance between connecting points of the breaking bar support member 58 at which the breaking bar 59 is supported by the support members 53, the linear servo motors A and B cannot move smoothly and may cause uneven movement of the linear servo motors A and B. And thus, it is preferable for the brittle material breaking device to include an axial distance adjustment mechanism for preventing the stress.

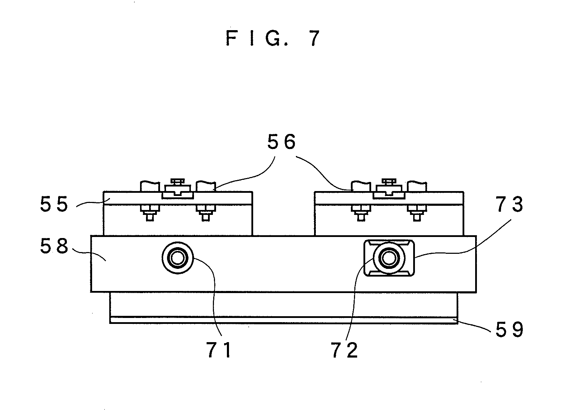

The axial distance adjustment mechanism is able to incline the breaking bar to adjust a distance between the support members 53. The axial distance adjustment mechanism is provided to a connecting portion where the support members 53 and the breaking bar support member 58 for supporting the breaking bar 59 are connected. Fig. 7 shows a view exemplifying the axial distance adjustment mechanism of the brittle material breaking device 1 according to the embodiment of the present invention.

The breaking bar support member 58 for supporting the breaking bar 59 has an approximately-rectangular opening portion 73 and is connected to the support members 53 by connecting portions 71 and 72. The connecting portion 71 rotatably connects the support member 53 to the breaking bar support member 58. On the other hand, the other connecting portion 72 is supported with the opening portion 73 that configures a slide mechanism for sliding the connecting portion 72 in the opening portion 73 and rotatably and slidably connects the support member 53 to the breaking bar support member 58.

In the case where the fall distances of the support members 53 are different and the breaking bar support member 58 and the breaking bar 59 accordingly incline, the connecting portion 72 slides in the opening portion 73 to prevent the stress from being applied to support members 53. Accordingly, the stress is not transmitted to the movement axes of the linear servo motors 57 and the uneven movement and the like can be prevented.

As described above, the breaking bar 59 can be inclined at a desired angle in the approximate vertical surface parallel with the fall direction of the breaking bar 59 by: employing a plurality of the support members 53 for the breaking bar 59, for example, two axes; and varying the fall distances of the support members. Accordingly, when the inclination angle of the breaking bar 59 is varied so that the stress applied to the brittle material can be gradually applied from one end of the scribe line to the other end, a pressure point movement similar to the pressure point movement of the case where the brittle material is sequentially torn by human hands can be realized, thereby realizing the breaking of a brittle material with high quality without causing a crack on edge faces.

In addition, even in the case where the falling speed of the breaking bar 59 is faster than that of the conventional servo breaking device, the excessive falling of the breaking bar 59 can be prevented by employing the control mechanism for regulating the breaking bar 59 so as not to move below a predetermined position, namely, the stopper. Accordingly, not only the thin brittle materials but also the thick brittle materials can be broken without changing the breaking device.

Moreover, though the inclination control of the breaking bar 59 is carried out by controlling movement distances of the linear servo motors 57 in the above-mentioned embodiment, the present invention is not especially restricted to this manner and the inclination control may be carried out, for example, by controlling rotations of the stepping motors 51.

Meanwhile, the brittle material applied to the present invention is not limited to a glass plate and any kinds of brittle materials that are broken with high quality after forming a scribe line can be applied to. The present invention can include various types of modifications and replacements within the scope of the present invention. For example, the change of the number of pulses per unit time sent by the CPU 63 to the two linear servo motors 57 is not limited to that of the above-mentioned embodiment, and a person skilled in the art obviously knows there are various types of pulse signal output patterns that can provide the same effect as that of the embodiment.

The brittle material breaking device includes: a support table for supporting a brittle material; and a breaking bar 59 for pressing down the brittle material on which a scribe line is formed and which is moved by a transfer means. And, the brittle material breaking device breaks the brittle material along the scribe line by using the breaking bar 59. The brittle material breaking device further comprises: a plurality of support members 53 for moving the breaking bar upward and downward; and liner servo motors 57 for moving a plurality of the support members 53. The support members 53 are arranged in a longitudinal direction of the breaking bar 59. The movements of the linear servo motors 57 are controlled so as to change an inclination angle of the breaking bar 59 in a nearly-vertical surface.

## Claims

1. A brittle material breaking device which comprises a breaking bar for pressing a brittle material on which a scribe line is formed and breaks said brittle material by pressing said breaking bar on said brittle material along said scribe line, **characterized in that**
the brittle material breaking device further comprises:
a breaking bar support member having a plurality of opening portions for supporting said breaking bar;
a plurality of moving members each having a connecting portion for rotatably supporting said breaking bar support member by connecting said connecting portion to said opening portion;
a plurality of support members for supporting a plurality of said moving members;
a plurality of motors for moving a plurality of said support members upward and downward; and
a control device for controlling movements of a plurality of said motors.

2. The brittle material breaking device according to claim 1, wherein
the inclination angle of said breaking bar in the nearly-vertical surface is changed so that the maximum pressure portion at which said brittle material is pressed down can move from one end of said scribe line to the other end.

3. The brittle material breaking device according to claim 1 or 2, further comprising:
an axial distance adjustment mechanism for adjusting a distance between said support members in the inclination of said breaking bar in one or more connecting portions between said support members and said breaking bar.

4. The brittle material breaking device according to any one of claims 1 to 3, including:
a control mechanism for preventing said breaking bar moving downward lower than a predetermined position.
